# EUROPÄISCHE PATENTANMELDUNG

(11) **EP 1 544 486 A1**
(43) Veröffentlichungstag der Anmeldung: **22.06.2005**
(21) Anmeldenummer: 04029590.9
(22) Anmeldetag: 14.12.2004
(51) Int. Cl.: F16C 33/78

(54) **Lagerdichtung und Lager**

(30) Priorität: 18.12.2003 DE 20319659 U; 19.04.2004 DE 202004006134 U
(71) Anmelder: Liebherr-Werk Biberach GmbH, 88400 Biberach an der Riss (DE)
(72) Erfinder: Mollhagen, Klaus Peter, 87700 Memmingen (DE)
(74) Vertreter: Laufhütte, Dieter, Dr.-Ing.

(57) **Zusammenfassung**

Die vorliegende Erfindung betrifft eine Lagerdichtung, insbesondere Wellendichtung oder Achsdichtung, zum dichtenden Verschließen eines Zwischenraumes zweier sich um eine Rotationsachse (A) über zumindest ein Lagermittel (2) relativ zueinander drehbar gelagerter Elemente (1,3), mit einem um die Rotationsachse (A) rotationssymmetrischen Zwischendichtring (15,115,215), zwei um die Rotationsachse (A) angeordneten, um die Rotationsachse rotationssymmetrischen Dichtringen (11,13), von denen einer sich mit dem einen Element um die Rotationsachse (A) bewegt und der andere sich mit dem anderen Element oder dem Zwischendichtring (15,115,215) um die Rotationsachse (A) bewegt, wobei der Zwischendichtring (15,115,215) zwischen den Dichtringen (11,13) angeordnet ist und diese voneinander trennt, und wenigstens einem von dem zumindest einen Lagermittel (2) unabhängigen Zwischendichtringantriebselement (31,131,231), das um eine von der Rotationsachse (A) beabstandeten Zwischendichtringantriebselementachse (30) drehbar mit dem Zwischendichtring (15,115,215) verbunden ist und derart in kraftschlüssige und/oder formschlüssige Wirkverbindung mit den drehbar zueinander gelagerten Elementen (1,3) bringbar ist, daß es bei Drehung der zwei Elemente (1,3) relativ zueinander zwischen den Elementen (1,3) wälzt.

## Beschreibung

Die Erfindung betrifft eine Lagerdichtung, insbesondere eine Wellendichtung oder Achsdichtung, zum dichtenden Verschließen eines Zwischenraumes zweier sich um eine Rotationsachse über zumindest ein Lagermittel relativ zueinander drehbar gelagerter Elemente. Die Erfindung betrifft weiterhin ein Lager mit zumindest einer solchen Lagerdichtung.

Lagerdichtungen können z. B. Wellendichtungen oder Achsdichtungen sein. Sie finden z. B. bei Fahrantrieben für Bagger, Planierraupen oder Achsen für Radlager Verwendung, die im Betrieb einer starken äußeren Belastung durch Schmutz unterliegen. Außerdem werden derartige Lagerdichtungen zur Verhinderung des Austrittes von Schmierstoffen verwendet. Dabei muß der Spalt zwischen einem in der Regel nicht-drehenden Gehäuseteil und einem sich drehenden Element abgedichtet werden. Auf die Dichtung werden also bei der Relativdrehung der beiden Teile große mechanische Kräfte in Umfangsrichtung ausgeübt.

Es gibt zwei Hauptbauarten von Lagerdichtungen, die in den verschiedensten Ausführungen überwiegend Verwendung finden, die am Beispiel eines Antriebes mit einem nicht-drehenden und einem sich relativ dazu drehenden Teil beschrieben werden.

Zum einen werden Dichtungen aus Elastomerstoffen verwendet, die auf der einen Seite fest mit dem stehenden Gehäuse verbunden sind und auf der anderen Seite ein oder mehrere elastisch nachgeführte Dichtkanten besitzen. In dieser Bauart sind am häufigsten sogenannte Wellendichtringe in Verwendung.

Zum anderen werden Gleitringdichtungen eingesetzt, bei denen die Dichtheit dadurch erreicht wird, daß zwei Gleitringe aus festen Werkstoffen aneinander gedrückt werden und der äußerst geringe Spalt zwischen dem stehenden und dem drehenden Gleitring den Schmierstoffaustritt und den Schmutzeintritt verhindert. Stand der Technik ist, daß die Gleitringdichtung aus zwei Stahlringen besteht, die wiederum durch zwei O-Ringe geführt und aufeinander gedrückt werden. Die Stahlringe sind in ihrer Form, dem Werkstoff und der Wärmebehandlung so beschaffen, daß sich an den Gleitflächen eine dauerhafte Dichtheit ergibt. Verschleiß der Dichtung durch aggressive Medien und Korrosion wird durch fortlaufende Erneuerung der Gleitflächen in Form von Abtrag ausgeglichen.

Die Lagerdichtungen sind in der Regel zwischen dem stehenden Teil und dem drehenden Teil bzw. zwischen den sich mit unterschiedlichen Drehzahlen drehenden Teilen angeordnet. Die an den Dichtkanten auftretende Gleitgeschwindigkeit ergibt sich damit unmittelbar aus der Differenz der Drehzahl der zwei Antriebsteile.

Mit zunehmender Drehzahl und zunehmender Größe der Antriebe erreichen die bekannten Lagerdichtungen die technisch machbare Grenze.

Um für eine solche Lagerdichtung auch einen größeren Drehzahlunterschied zu ermöglichen bzw. sie in größeren Antrieben einsetzbar zu machen, wurde bereits vorgeschlagen, einen Zwischendichtring einzusetzen, der ebenfalls um die Rotationsachse der Elemente rotationssymmetrisch ist, mit den Dichtringen in Kontakt steht und diese voneinander trennt. Der Zwischendichtring wird bei der bekannten Lösung durch die Bewegung des Wälzlagerkäfigs eines Wälzlagers angetrieben, das das drehende Element und das in der Regel nicht-drehende Gehäuseelement voneinander trennt und zum Abwälzen des drehenden Elementes an dem stehenden Gehäuseelement dient. Die Geschwindigkeit des Wälzlagerkäfigs um die Rotationsachse entspricht inhärent der halben Geschwindigkeit des drehenden Elementes um das stehende Gehäuseteil. Auf diese Weise wird der Zwischendichtring mit der halben Geschwindigkeit des drehenden Elementes angetrieben. Die Relativgeschwindigkeit der Gleitflächen zwischen den Dichtringen und dem Zwischendichtring entspricht also der halben Relativgeschwindigkeit, die zwischen den zwei Gleitflächen der Dichtringe vorliegen würde, wenn kein Zwischendichtring vorgesehen wäre. Die Relativgeschwindigkeit der einzelnen Elemente zueinander und somit die Geschwindigkeiten, mit denen einzelne Flächen aneinander gleiten, wird dadurch reduziert und der Abtrieb und die Wärmeentwicklung verringert.

Um den Zwischendichtring über das Wälzlager anzutreiben, muß das Wälzlager nahe genug an dem Zwischendichtring angeordnet sein. Bei Lagern, bei denen das Wälzlager einen größeren Abstand von der Dichteinheit hat, ist ein solcher Antrieb des Zwischendichtringes nicht möglich. Auch bei Lagern, die kein Wälzlager aufweisen, also z. B. Flüssigkeitslager, magnetische Lager oder Gleitlager, kann der Zwischendichtring nicht auf die beschriebene Art und Weise angetrieben werden.

Es ist die Aufgabe der vorliegenden Erfindung, eine Lagerdichtung, insbesondere eine Wellendichtung oder Achsdichtung, und ein Lager anzugeben, die einen großen Drehzahlunterschied ermöglichen bzw. in großen Antrieben einsetzbar sind und unabhängig von dem eigentlichen Lagermechanismus flexibel eingesetzt werden können.

Diese Aufgabe wird mit einer Lagerdichtung mit den Merkmalen des Anspruches 1 und einem Lager mit den Merkmalen des Anspruches 11 gelöst.

Die erfindungsgemäße Lagerdichtung weist wenigstens ein von dem zumindest einen Lagermittel unabhängiges Zwischendichtringantriebselement auf, das um eine von der Rotationsachse radial beabstandete Zwischendichtringantriebselementachse drehbar mit dem Zwischendichtring verbunden ist und derart ausgestaltet ist, daß es in kraftschlüssige und/oder formschlüssige Wirkverbindung mit den drehbar zueinander gelagerten Elementen bringbar ist, so daß es bei der Relativdrehung der zwei Elemente zueinander zwischen den Elementen wälzt.

Der Begriff "Rotationsachse" wird im vorliegenden Text auch zur Bezeichnung der Rotationssymmetrieachse verwendet.

Mit dem erfindungsgemäßen Zwischendichtringantriebselement wird der Zwischendichtring mit einer Drehgeschwindigkeit angetrieben, die zwischen den Drehgeschwindigkeiten der beiden relativ zueinander drehbar gelagerten Elemente liegt, so daß der Zwischendichtring zur effektiven Reduzierung der Relativgeschwindigkeiten der einzelnen Teile dient. Das Zwischendichtringantriebselement wird jedoch von dem eigentlichen Lagermittel unabhängig angetrieben. Dieser Antrieb erfolgt durch eine formschlüssige oder kraftschlüssige Wirkverbindung des Zwischendichtringantriebselementes sowohl mit dem einen als auch mit dem anderen der zwei sich relativ zueinander drehenden Elemente. Bei der erfindungsgemäßen Ausgestaltung ist also keine Verbindung mehr zwischen dem Zwischendichtring und einem Wälzlager notwendig. Insofern ist die erfindungsgemäßen Lagerdichtung auch bei Lagern einsetzbar, bei denen kein Wälzlager vorgesehen ist, also z. B. bei magnetischen Lagerungen, Flüssigkeitslagerungen oder Gleitlagerungen. Auch bei Lagern, bei denen das Wälzlager nicht direkt benachbart zu den Dichtringen ist, ist die erfindungsgemäße Lagerdichtung einsetzbar.

Das Zwischendichtringantriebselement kann zur Bildung einer formschlüssigen Verbindung mit den zwei sich relativ zueinander bewegenden Elementen z. B. zumindest ein Zahnrad umfassen, das mit einem Zahnkranz an einem der Elemente und einem Zahnkranz an dem anderen der Elemente kämmt. Auf diese Weise bewegt sich das Zwischendichtringantriebselement mit der Hälfte der Relativgeschwindigkeit der zwei Elemente. Eine solche Ausführungsform stellt einen sicheren und präzisen Antrieb des Zwischendichtringantriebselementes dar.

Bei einer anderen einfachen und kostengünstigen Ausgestaltung umfaßt das Zwischendichtringantriebselement zumindest ein Reibrad, das sowohl mit einer Lauffläche an einem der rotierenden Elemente als auch mit einer Lauffläche an dem anderen der rotierenden Elemente in kraftschlüssiger Verbindung steht.

Die kraftschlüssige bzw. formschlüssige Verbindung des Zwischendichtringantriebselementes mit den zwei relativ zueinander rotierenden Elementen kann direkt sein, also z. B. durch direkt an den Elementen vorgesehene Zahnkränze, mit denen ein als Zahnrad ausgestaltetes Zwischendichtringantriebselement kämmt. Ebenso kann eine indirekte kraftschlüssige bzw. formschlüssige Verbindung vorgesehen sein. So kann das Zwischendichtringantriebselement z. B. mit einem Element direkt in formschlüssiger bzw. kraftschlüssiger Wirkverbindung stehen und andererseits mit dem Dichtring, der sich mit dem anderen Element bewegt. Steht dieser Dichtring mit dem Element, mit dem er sich bewegt, z. B. über eine elastomere O-Ring-Dichtung in Verbindung, so ist auf diese Weise eine flexible und tolerante Lagerung gesichert.

Der Zwischendichtring kann über ein einzelnes Zwischendichtringantriebselement angetrieben werden. Eine größere Sicherheit und Gleichmäßigkeit ist gewährleistet, wenn mehrere Zwischendichtringantriebselemente am Umfang des Zwischendichtringes angeordnet sind und den Zwischendichtring somit an mehreren Stellen antreiben. Besonders vorteilhaft ist eine symmetrische Anordnung der Zwischendichtringantriebselemente.

Bei einer vorteilhaften Weiterbildung der erfindungsgemäßen Lagerdichtung befinden sich auf einer Zwischendichtringantriebselementachse zumindest zwei Zwischendichtringantriebselemente in symmetrischer Anordnung zum Zwischendichtring. Auf diese Weise werden die radialen Kräfte der Zwischendichtringantriebselementachse auf den Zwischendichtring verringert, so daß ein gleichmäßigerer und geräuscharmer Lauf möglich ist.

Um einen flexibleren und toleranteren Antrieb des Zwischendichtringes zu ermöglichen, kann vorgesehen sein, daß das zumindest eine Zwischendichtringantriebselement in einem elastomeren Bereich des Zwischendichtringes gelagert ist.

Besonders einfach ist eine Ausgestaltung, bei der die Zwischendichtringantriebselementachse des zumindest einen Zwischendichtringantriebselementes parallel zu der Rotationsachse bzw. der Rotationssymmetrieachse ist, um die sich die drehbar zueinander gelagerten Elemente drehen. Es sind jedoch ebenfalls Ausgestaltungen möglich, bei denen die Zwischendichtringantriebselementachse in einem Winkel zur Rotationssymmetrieachse angeordnet ist, z. B. wenn das Zwischendichtringantriebselement ein schräg verzahntes Zahnrad umfaßt.

Eine Ausführungsform der erfindungsgemäßen Lagerdichtung weist zwei vorzugsweise metallische Gleitringe auf, die z. B. über O-Ringe aus Elastomerstoffen an den zwei drehenden Elementen anliegen. Der Zwischendichtring ist bei dieser Ausführungsform als zwischen den Gleitringen angeordneter Zwischengleitring ausgestaltet. Diese Ausführungsform ermöglicht besonders hohe Drehgeschwindigkeiten und einen belastungsarmen Betrieb. Bei einer solchen Ausführungsform ist es z. B. möglich, daß das zumindest eine Zwischendichtringantriebselement in Wirkverbindung mit einem Zahnkranz oder einer Lauffläche eines der Gleitringe steht.

Bei einer anderen Ausführungsform der erfindungsgemäßen Lagerdichtung sind zwei Dichtungen aus Elastomerstoffen vorgesehen. Der Zwischendichtring ist bei dieser Ausführung als zwischen diesen Dichtungen angeordneter Zwischenring ausgestaltet. Eine solche Ausführungsform ist einfach im Aufbau und kostengünstig. Gesonderte Gleitringe brauchen hier nicht eingesetzt werden. Eine der Dichtungen bewegt sich mit dem einen der relativ zueinander drehenden Elemente. Die andere Dichtung bewegt sich entweder mit dem anderen der zwei sich relativ zueinander drehenden Elemente oder mit dem Zwischenring.

Die Erfindung umfaßt auch Ausgestaltungen, bei welchen die Wirkverbindung mehrstufig erfolgt, z. B. über mehrere ineinander kämmende Zahnräder. So lassen sich unterschiedliche Geschwindigkeiten des Zwischendichtringes realisieren.

Ein erfindungsgemäßes Lager weist zwei sich um eine Rotationsachse zueinander drehbar gelagerte Elemente auf. Die Elemente sind über zumindest ein Lagermittel relativ zueinander drehbar gelagert. Weiterhin ist eine erfindungsgemäße Lagerdichtung zum Verschluß des Zwischenraumes der zwei sich relativ zueinander drehenden Elemente vorgesehen. Die Vorteile eines solchen erfindungsgemäßen Lagers mit zumindest einem vom Lagermittel unabhängigen Zwischendichtringantriebselement ergeben sich in analoger Weise wie oben bereits für die erfindungsgemäße Lagerdichtung beschrieben.

Eine besondere Ausführungsform des erfindungsgemäßen Lagers weist als Lagermittel ein Wälzlager auf. Das Lagermittel kann aber auch anders, z. B. durch eine Flüssigkeitslagerung, eine magnetische Lagerung oder ein Gleitlager gebildet sein.

Die Erfindung wird anhand der anliegenden Figuren im Detail erläutert, die Ausführungsformen der Erfindung zeigen. Dabei zeigt:
- Figur 1:: eine Teilschnittansicht durch ein erfindungsgemäßes Lager mit einer erfindungsgemäßen Lagerdichtung,
- Figur 2:: einen in Figur 1 mit II bezeichneten Teilquerschnitt durch das Lager der Figur 1,
- Figur 3:: eine Teilschnittansicht einer anderen Ausführungsform eines erfindungsgemäßen Lagers mit einer anderen Ausführungsform einer erfindungsgemäßen Lagerdichtung,
- Figur 4:: eine in Figur 3 mit IV bezeichnete Teilquerschnittsansicht durch das Lager der Figur 3,
- Figur 5:: eine Teilschnittansicht durch eine weitere Ausführungsform eines erfindungsgemäßen Lagers mit einer weiteren Ausführungsform einer erfindungsgemäßen Lagerdichtung, und
- Figur 6:: eine in Figur 5 mit VI bezeichnete Teilquerschnittsansicht durch das Lager der Figur 5.

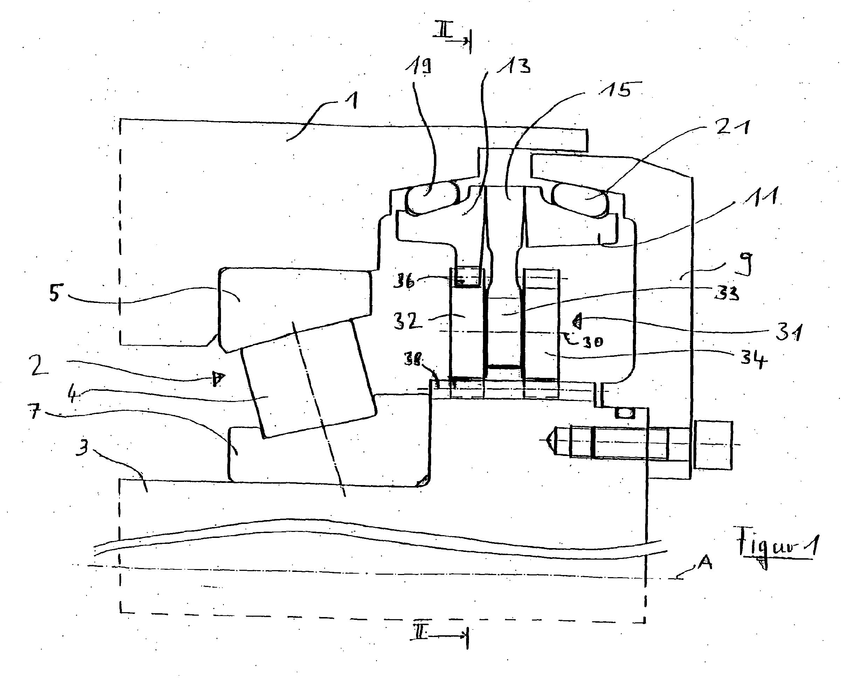

Figur 1 zeigt eine Teilschnittansicht eines Lagers, wie es z. B. bei Antrieben Verwendung findet. Es zeigt einen stehenden Teil 3, der im wesentlichen rotationssymmetrisch zur Rotationssymmetrieachse A ist. 1 zeigt den im Ausschnitt gezeigten rotierenden Teil des Lagers. Das rotierende Element 1 wälzt sich über das Wälzlager 2 in an sich bekannter Weise über den stehenden Teil 3 ab. Das Wälzlager 2 besteht jeweils aus einem Innenring 7 und einem sich drehenden Außenring 5. Die beiden Ringe 5 und 7 sind mit den Elementen 1 und 3 fest verbunden und wälzen sich in an sich bekannter Weise über Wälzkörper 4 ab.

In dem mit dem Außenring 5 umlaufenden Antriebsteil 1 befindet sich der über den O-Ring 19 gehaltene umlaufende Gleitring 13. In dem mit dem stehenden Teil 3 des Antriebes verbundenen Verschlußring 9 befindet sich der zweite über den zweiten O-Ring 21 gehaltene Gleitring 11. Zwischen den Gleitringen 11 und 13 befindet sich der Zwischengleitring 15.

Der Gleitring 13 umfaßt eine Innenverzahnung 36, während das stehende Teil 3 eine Außenverzahnung 38 umfaßt. Zwischen diesen Verzahnungen ist zumindest ein Antriebselement 31 für den Zwischengleitring 15 vorgesehen. Bei der gezeigten Ausführungsform besteht das Antriebselement 31 aus einer Mittelachse 33, die sich um die Symmetrieachse 30 dreht. Symmetrisch zum Zwischengleitring 15 sind auf der Achse 33 zwei Zahnräder 32 bzw. 34 angeordnet. Beide Zahnräder kämmen bei der gezeigten Ausführungsform mit dem Außenzahnkranz 38 des stehenden Teiles 3. Eines der Zahnräder 32 kämmt zusätzlich mit dem Innenzahnkranz 36 des Gleitringes 13.

Figur 1 zeigt nur eine Teilschnittansicht. So sind der stehende Teil 3, der drehende Teil 1, der Zwischengleitring 15, die Gleitringe 11, 13, die O-Ring-Dichtungen 19, 21 und der Verschlußring 9 in der Regel rotationssymmetrisch um die Rotationsachse A. Die gebogenen Bruchlinien im unteren Teil der Figur 1 sollen schematisch andeuten, daß die Rotationsachse A auch eine größere Entfernung von den genannten Elementen haben kann. Die gestrichelte Linie im linken Teil der Figur 1 deutet an, daß sich die Elemente 1 und 3 in dieser Richtung fortsetzen können und z. B. in eine zweite entsprechend spiegelverkehrte Anordnung münden können.

Die O-Ringe 19, 21 sind herkömmliche O-Ringe, z. B. aus Elastomerstoffen. Die Gleitringe 11, 13 sind z. B. aus Stahl gefertigt.

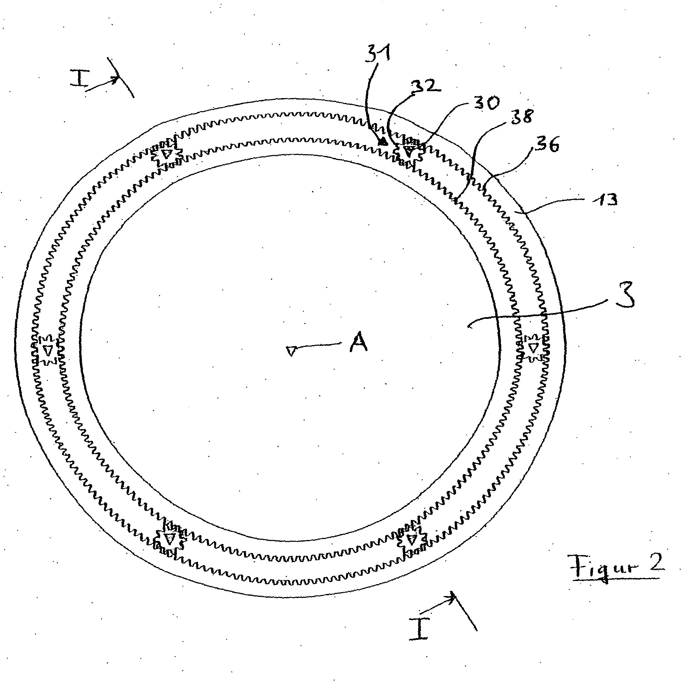

Figur 2 zeigt einen in Figur 1 mit II bezeichneten Schnitt durch ein Lager der Figur 1. In Figur 2 bezeichnet I andererseits etwa den in Figur 1 gezeigten Schnitt. Man erkennt den äußeren Zahnkranz 38 auf dem stehenden Teil 3. Auf dem Zahnkranz 38 laufen die Zahnräder 32 und nicht sichtbare Zahnräder 34 um jeweils eine Achse 30. Die Zahnräder 32 kämmen auf der anderen Seite mit dem Zahnkranz 36 des Gleitringes 13. Gezeigt ist eine Ausführungsform mit sechs Zwischengleitringantriebselementen 31, die symmetrisch um das stehende Teil 3 angeordnet sind.

Im Betrieb dreht sich das Element 1 um das stehende Teil 3. Dabei wird das Element 1 durch einen nicht gezeigten Motor in an sich bekannter Weise angetrieben und wälzt sich über das Wälzlager 2 an dem stehenden Teil 3 ab. Der Gleitring 13 bewegt sich mit derselben Geschwindigkeit wie das Element 1, während der Gleitring 11 feststeht. Zwischen den Gleitringen 13 und 11 befindet sich der Zwischengleitring 15, in dem die Zwischengleitringantriebselemente 31 drehbar gelagert sind. Die Zahnräder 32 der Zwischengleitringantriebselemente 31 kämmen einerseits mit dem stehenden Zahnkranz 38 und andererseits mit dem sich bewegenden Zahnkranz 36 des Gleitringes 13. Dadurch bewegen sich die Zwischengleitringantriebselemente 31 mit der halben Geschwindigkeit des Elementes 1 um die Rotationssymmetrieachse A. Insofern bewegt sich auch der Zwischengleitring 15 mit der halben Geschwindigkeit des Gleitringes 13 um die Rotationsachse A.

Die Relativgeschwindigkeit des Zwischengleitringes 15 gegenüber dem Gleitring 13 entspricht also der halben Drehzahl des Elementes 1. Ebenso entspricht die Relativgeschwindigkeit zwischen dem Zwischengleitring 15 und dem Gleitring 11 der halben Drehzahl des Elementes 1. Die Relativgeschwindigkeit der einzelnen aneinander gleitenden Flächen ist also halbiert und der Abrieb und die Wärmeentwicklung verringert.

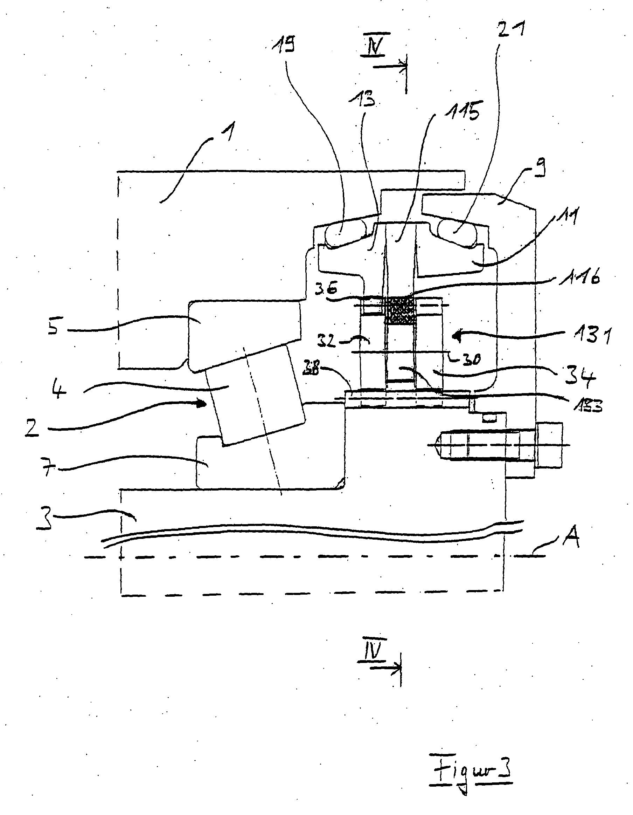

Figur 3 zeigt eine weitere Ausführungsform. Gleiche Elemente sind mit gleichen Bezugsziffern bezeichnet. Im Unterschied zu der Ausführungsform der Figur 1 umfaßt der Zwischengleitring 115 einen elastomeren Bereich 116.

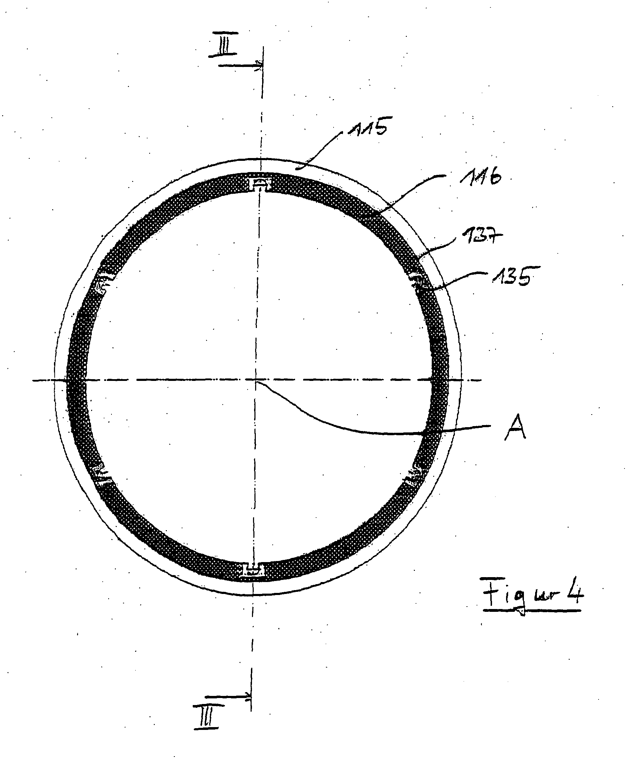

Figur 4 zeigt eine Schnittansicht, die in Figur 3 mit IV angedeutet ist. Gezeigt ist in Figur 4 der Schnitt durch den Zwischengleitring 115. In dem elastomeren Bereich 116 des Zwischengleitringes 115 sind nach innen weisende Aufnahmen 135 vorgesehen, die z. B. durch entsprechend eingesetzte Metallstücke 137 gebildet werden. In diese Aufnahmen 135 sind die Achsenelemente 133 der Zwischengleitringantriebselemente 131 eingelegt. Der Schnitt durch den Zwischengleitring 115, der in Figur 3 sichtbar ist, ist in Figur 4 mit III bezeichnet.

Im Betrieb wird die Bewegung der Zwischengleitringantriebselemente 133 über die Aufnahmen 135, 137 auf den elastomeren Bereich 116 des Zwischengleitringes 115 übertragen, so daß er ähnlich wie bereits mit Bezug zur Ausführungsform der Figuren 1 und 2 beschrieben mit der halben Drehzahl des sich drehenden Elementes 1 bewegt wird.

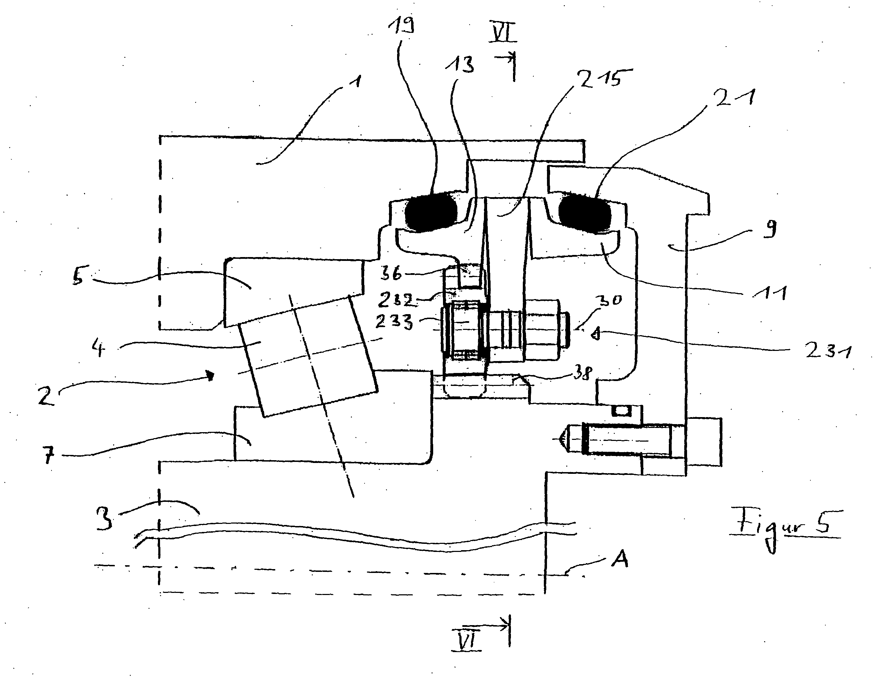

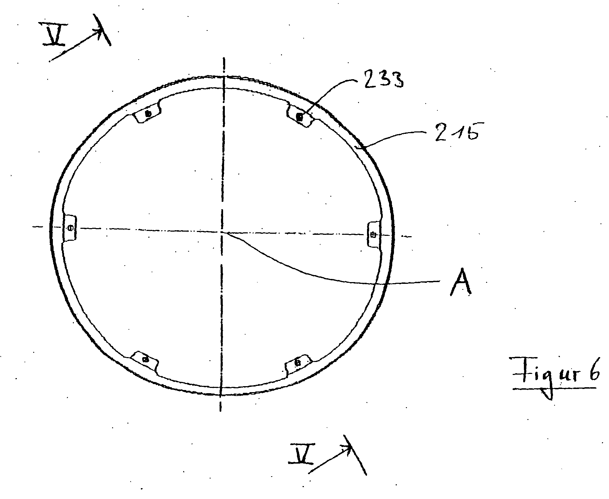

Figur 5 zeigt eine Ausführungsform, bei der ein Zwischengleitringantriebselement 231 nur ein Zahnrad 232 aufweist. Das Zahnrad 232 ist über eine Lagerung 233 in entsprechend angeordneten Öffnungen des Zwischengleitringes 215 angeordnet. Es kann z. B. über Kugellager auf einer entsprechenden in dem Zwischengleitring 215 mit einer Mutter gehaltenen Achse 233 abrollen. Einen Schnitt durch den Zwischengleitring 215, der in Figur 5 mit VI bezeichnet ist, zeigt Figur 6. In Figur 6 ist die in Figur 5 sichtbare Ansicht des Zwischengleitringes 215 mit V bezeichnet.

Selbstverständlich können einzelne Ausführungsformen auch miteinander kombiniert sein. Zum Beispiel kann eine Kugellagerung der Zahnräder 32, 34 ähnlich der Kugellagerung für das Zahnrad 232 vorgesehen sein. Andererseits kann z. B. die Ausführungsform der Figuren 5 und 6 auch einen elastomeren Bereich 116 aufweisen, wie er mit Bezug zu der Ausführungsform der Figuren 3 und 4 beschrieben ist.

Bei allen beschriebenen Ausführungsformen kämmen die Zahnräder 32, 232 mit dem Zahnkranz 36 des Gleitringes 13. Bei anderen, nicht gezeigten Ausführungsformen ist der Zahnkranz 36 nicht am Gleitring 13, sondern am Element 1 direkt vorgesehen. Eine solche Ausführungsform ermöglicht auch den Verzicht auf Gleitringe 11, 13, wobei der Zwischendichtring dann direkt zwischen elastomeren Dichtungen angeordnet ist, von denen sich eine mit dem rotierenden Element 1 bewegt, während die andere mit dem stehenden Element 3 steht.

Die Ausgestaltung mit Zahnrädern 32, 34, 232 für das Zwischendichtringantriebselement 31, 131, 231 sichert eine präzise Bewegung des Zwischendichtringes 15, 115, 215. Eine andere, einfache und kostengünstige Ausgestaltung umfaßt keinen formschlüssigen Zahnradantrieb, sondern einen kraftschlüssigen Reibradantrieb, wobei die Zahnkränze 36, 38 durch entsprechende Laufflächen und die Zahnräder 32, 34, 232 durch entsprechende Reibräder ersetzt sind.

Die Erfindung ist nicht darauf beschränkt, daß der Zwischendichtring mit der halben Drehzahl des rotierenden Elementes 1 angetrieben wird. Ebenso können entsprechende mehrstufige Zwischendichtringantriebselemente vorgesehen sein, so daß unterschiedliche Drehzahlen des Zwischendichtringes ausgewählt werden können.

Die erfindungsgemäße Lagerdichtung ist nicht auf die Anwendung in Antrieben beschränkt. Sie kann eingesetzt werden, wo zwei Elemente sich relativ zueinander drehen und der Zwischenraum zwischen ihnen trotzdem dichtend verschlossen sein soll. Insbesondere ist die erfindungsgemäße Lagerdichtung nicht auf Ausführungsformen beschränkt, bei denen sich ein äußeres Element 1 um ein inneres Element 3 bewegt, wie es bei den beschriebenen Ausführungsbeispielen der Fall ist. Möglich ist es auch, daß sich das innere Element in dem äußeren Element dreht oder daß beide Elemente sich in gleicher Drehrichtung mit unterschiedlicher Geschwindigkeit oder gegeneinander drehen.

Die gezeigten Ausführungsbeispiele beziehen sich auf Ausführungen mit Gleitringdichtungen, die jeweils Gleitringe 11, 13 und O-Ringe 21, 19 umfassen. Die Erfindung ist jedoch auch bei Systemen einsetzbar, bei denen keine gesonderten Gleitringe eingesetzt werden, sondern z. B. elastomere Dichtringe, die jeweils zwischen dem Zwischenring und einem der sich relativ zueinander drehenden Elemente angeordnet sind.

Bei den bisher beschriebenen Ausführungsformen dreht sich jeweils ein Dichtring 13 mit einem Element 1 der zwei sich relativ zueinander drehenden Elemente und der andere Dichtring 11 mit dem anderen Element 3 der zwei sich relativ zueinander drehenden Elemente. Die reduzierten Relativgeschwindigkeiten treten dabei zwischen den Dichtringen 11, 13 und dem Zwischendichtring 15, 115, 215 auf. Die Erfindung ist ebenfalls bei Anordnungen einsetzbar, bei denen sich ein Dichtring mit einem der zwei sich relativ zueinander drehenden Elemente bewegt und der andere Dichtring mit dem Zwischendichtring.

## Patentansprüche

1. Lagerdichtung, insbesondere Wellendichtung oder Achsdichtung, zum dichtenden Verschließen eines Zwischenraumes zweier sich um eine Rotationsachse (A) über zumindest ein Lagermittel (2) relativ zueinander drehbar gelagerter Elemente (1, 3), mit
- einem um die Rotationsachse (A) rotationssymmetrischen Zwischendichtring (15, 115, 215),
- zwei um die Rotationsachse (A) angeordneten, um die Rotationsachse rotationssymmetrischen Dichtringen (11, 13), von denen einer sich mit dem einen Element um die Rotationsachse (A) bewegt und der andere sich mit dem anderen Element oder dem Zwischendichtring (15, 115, 215) um die Rotationsachse (A) bewegt,
wobei der Zwischendichtring (15, 115, 215) zwischen den Dichtringen (11, 13) angeordnet ist und diese voneinander trennt, und
- wenigstens einem von dem zumindest einen Lagermittel (2) unabhängigen Zwischendichtringantriebselement (31, 131, 231), das um eine von der Rotationsachse (A) beabstandeten Zwischendichtringantriebselementachse (30) drehbar mit dem Zwischendichtring (15, 115, 215) verbunden ist und derart in kraftschlüssige und/oder formschlüssige Wirkverbindung mit den drehbar zueinander gelagerten Elementen (1, 3) bringbar ist, daß es bei Drehung der zwei Elemente (1, 3) relativ zueinander zwischen den Elementen (1, 3) wälzt.

2. Lagerdichtung nach Anspruch 1, bei der das wenigstens eine Zwischendichtringantriebselement zumindest ein Zahnrad (32, 232) zur formschlüssigen Wirkverbindung mit den relativ zueinander drehbar gelagerten Elementen (1, 3) umfaßt.

3. Lagerdichtung nach Anspruch 1, bei der das wenigstens eine Zwischendichtringantriebselement zumindest ein Reibrad zur kraftschlüssigen Wirkverbindung mit den relativ zueinander drehbar gelagerten Elementen (1, 3) umfaßt.

4. Lagerdichtung nach einem der Ansprüche 1 bis 3, bei der die Wirkverbindung des wenigstens einen Zwischendichtringantriebselementes (31, 131, 231) mit einem der relativ zueinander drehbar gelagerten Elemente (1, 3) über eine kraftschlüssige oder formschlüssige Wirkverbindung mit dem sich mit diesem Element (1) bewegenden Dichtring (13) erfolgt.

5. Lagerdichtung nach einem der Ansprüche 1 bis 4, bei der zumindest zwei Zwischendichtringantriebselemente (31, 131, 231) in Umfangsrichtung des Zwischendichtringes (15) vorzugsweise symmetrisch angeordnet sind.

6. Lagerdichtung nach einem der Ansprüche 1 bis 5, bei der der Zwischendichtring (115) einen elastomeren Bereich (116) umfaßt, der zur Halterung der Zwischendichtringantriebselementachse (133) des wenigstens einen Zwischendichtringantriebselementes (131) ausgestaltet ist.

7. Lagerdichtung nach einem der Ansprüche 1 bis 6, bei der zumindest zwei Zwischendichtringantriebselemente (32, 34) vorgesehen sind, die um dieselbe Zwischendichtringantriebselementachse (30) drehbar mit dem Zwischendichtring (15, 115) verbunden sind.

8. Lagerdichtung nach einem der Ansprüche 1 bis 7, bei der die Zwischendichtringantriebselementachse (30) des wenigstens einen Zwischendichtringantriebselementes (31, 131, 231) parallel zur Rotationsachse (A), um die sich die drehbar zueinander gelagerten Elemente (1, 3) drehen, ist.

9. Lagerdichtung nach einem der Ansprüche 1 bis 8, bei der die zwei Dichtringe Gleitringe (11, 13) umfassen, die vorzugsweise über O-Ringe (21, 19) an den zwei relativ zueinander drehbaren Elementen (3, 1) anliegen, und der Zwischendichtring (15, 115, 215) als zwischen den Gleitringen (11, 13) angeordneter Zwischengleitring (15, 115) ausgestaltet ist.

10. Lagerdichtung nach einem der Ansprüche 1 bis 8, bei der die Dichtringe zwei um die Rotationsachse rotationssymmetrische Dichtungen aus Elastomerstoff umfassen und der Zwischendichtring als zwischen den Dichtungen angeordneter Zwischenring ausgestaltet ist.

11. Lager mit
- zwei um eine Rotationsachse (A) relativ zueinander drehbar gelagerten Elementen (1, 3),
- zumindest einem Lagermittel (2) zur Lagerung der zwei relativ zueinander drehbar gelagerten Elemente (1, 3) gegeneinander, und
- zumindest einer Lagerdichtung gemäß einem der Ansprüche 1 bis 10.

12. Lager nach Anspruch 11, bei dem das Lagermittel ein Wälzlager (2) umfaßt.
